Europäisches Patentamt

European Patent Office

Office européen des brevets

(11) Publication number: **0 410 720 A2**

# EUROPEAN PATENT APPLICATION

(21) Application number: 90308145.3

(51) Int. Cl.5: **G06F 15/72**

(22) Date of filing: **25.07.90**

(30) Priority: **25.07.89 JP 193490/89**

(43) Date of publication of application:
**30.01.91 Bulletin 91/05**

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Ishibashi, Fumiaki**
**c/o Seiko Instruments Inc., 31-1 Kameido**
**6-chome**
**Koto-ku, Tokyo(JP)**

(74) Representative: **Caro, William Egerton et al**
**J. MILLER & CO. Lincoln House 296-302 High**
**Holbornorn**
**London WC1V 7JH(GB)**

(54) **System and method for generating picture element data for a polygon figure.**

(57) An image processing system for generating picture element data for painting a colour polygon figure comprises plane parameter calculating means (1) for defining initial co-ordinates $x_0$, $y_0$, and $z_0$ and an initial intensity $I_0$ of said polygon figure and calculating partial differential co-efficients:
$\partial z/\partial x$, $\partial I/\partial x$, $\partial z/\partial y$, and $\partial I/\partial y$,
on the basis of two plane formulae expressing three dimensional co-ordinates and intensities in a polygon plane; and interpolation means (4) connected to the plane parameter calculating means and comprising means (5, 6, 13) for generating from the initial co-ordinates $x_0$ and $y_0$ x- and y- directional co-ordinate picture element data, and calculating means (7 to 12) for calculating from the initial co-ordinate $z_0$ and initial intensity $I_0$ and the partial differential co-efficients z- directional co-ordinate and intensity picture element data.

F I G. 3

# SYSTEM AND METHOD FOR GENERATING PICTURE ELEMENT DATA FOR A POLYGON FIGURE

The present invention relates to an image processing system and method, and, more particularly, to a system and method for generating picture element data for a colour polygon figure displayed by a display unit in, for example, a three dimensional graphic system or a three dimensional graphic work system.

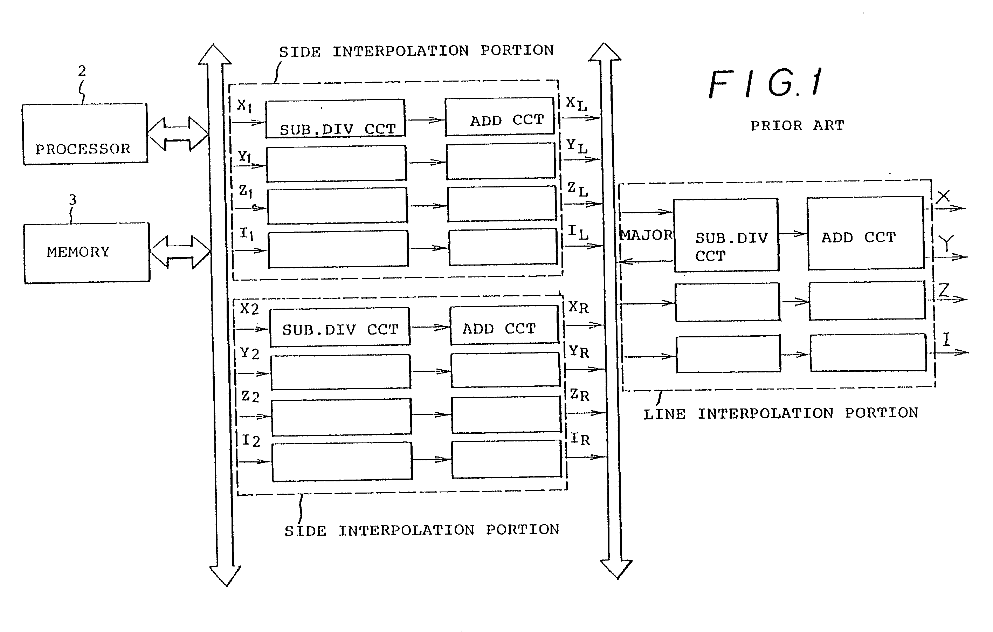

A polygon painting function is necessary in colour graphic display apparatus. Such a colour graphic display apparatus, shown in Figure 1, is provided with polygon painting apparatus including a side interpolation portion, composed of many subtraction and division circuits and many addition circuits, and a line interpolation portion for drawing lines on the basis of data obtained by the side interpolation portion.

More specifically, the construction of the polygon painting apparatus comprises the above side interpolation portion composed of eight subtraction and division circuits, which calculate gradients in the x direction, the y direction and of an intensity I of two opposite sides in a polygon region, and eight addition circuits, each of which inputs corresponding output data from the corresponding subtraction and division circuit, to simultaneously carry out a line interpolation of the two sides in the x direction, the y direction and the intensity I. Also, the above line interpolation portion comprises three subtraction and division circuits for inputting data obtained by the side interpolation porition, and three addition circuits for inputting data obtained by the three subtraction and division circuits, and processes the two sets of side interpolated data obtained by the side interpolation portion as line end data to be drawn, to generate pixel data corresponding to the lines to be drawn, and then supplies the same to an image memory (not shown).

Accordingly, the line interpolation for the two sides can be carried out at a high speed, and thereafter a large amount of pixel data corresponding to the lines to be drawn can be generated on the basis of the interpolated data.

The above polygon painting apparatus suffers from a disadvantage in that many subtraction and division circuits must be provided in the side interpolation portion and the line interpolation portion, and further has the following disadvantages due to the construction whereby the side interpolation portion and the line interpolation portion are incorporated in a master-slave relationship.

A first problem with the above apparatus is that although the rate of use of the side interpolation portion is very low, a large number of the subtraction and division circuits and the addition circuits must be provided, and thus the efficiency of use of the subtraction and division circuits and the addition circuits is very low. As a particular example of the above, assuming that one polygon is a square consisting of 20 x 20 picture elements and the processing for one polygon is carried out in the side interpolation portion, the subtraction and division processes are executed twice and the addition process is executed twenty times, for one parameter of the polygon figure, and in the line interpolation, the subtraction and division processes are executed twenty times and the addition process is executed four hundred times for one parameter. Accordingly, it is clear that the rate of use of the side interpolation portion is much lower than that of the line interpolation portion.

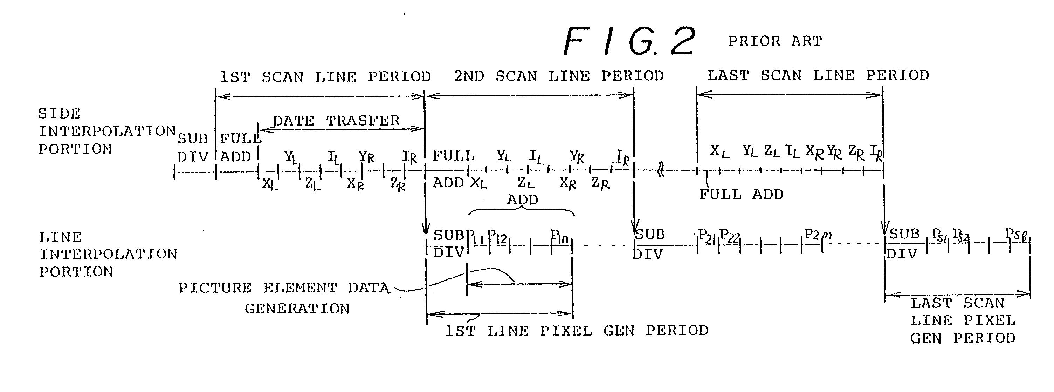

A second problem with the above apparatus will now be described. The line interpolation portion requires a set of arranged data obtained by the side interpolation portion. If the calculation in and data transfer from the side interpolation portion is delayed, the start of the processing in the line interpolation portion is delayed, and as a result the overall processing speed becomes low. In more detail, as shown in Figure 2, in the side interpolation portion, the addition at the addition circuits is carried out for the data output from the subtraction and division circuits, and then the obtained interpolated data is sent to the line interpolation portion. Namely, the above addition and transfer of the resultant interpolated data are carried out in series. Also, in the line interpolation portion, after the data transfer from the side interpolation portion, the subtraction and division for calculating the gradient of the lines and the addition for generating the picture element data are carried out. Accordingly, if the processing time in the side interpolation portion is longer than the processing time of the line interpolation portion, the start of the processing by the line interpolation portion is delayed, resulting in a longer processing time.

A third problem with the above apparatus is that, during the processing of the line interpolation, the subtraction and the division requirements at a first stage impede an increase of the speed of the picture element data generation. In more detail, as shown in Figure 2, the essential aim of the line interpolation portion is the generation of the picture element data but in the prior art, prior to the addition for generating the picture element data, the subtraction and division for obtaining the gradients of the lines must be carried out and this data must be serially transferred. As a result, the subtraction and division processes impede an improvement of the speed of generating the picture element data.

An object of the present invention is to provide an image data processing system for generating picture element data for painting a colour polygon figure having a simplified construction and an improved processing efficiency for generating the picture element data.

Another object of the present invention is to provide a method of generating picture element data for a polygon figure at a high speed.

According to a first aspect of the present invention, there is provided an image data processing system for generating picture element data for painting a colour polygon figure, characterised by plane parameter calculating means for defining initial co-ordinates $x_0$, $y_0$, and $z_0$ and an initial intensity $I_0$ of said polygon figure and calculating partial differential co-efficients:

$\partial z/\partial x$, $\partial I/\partial x$, $\partial z/\partial y$, and $\partial I/\partial y$,

on the basis of two plane formulae expressing three dimensional co-ordinates and intensities in a polygon plane; and interpolation means connected to the plane parameter calculating means and comprising means for generating from the initial co-ordinates $x_0$ and $y_0$ x-and y- directional co-ordinate picture element data, and calculating means for calculating from the initial co-ordinate $z_0$ and initial intensity $I_0$ and the partial differential co-efficients z- directional co-ordinate and intensity picture element data.

In a preferred embodiment of the present invention described below, the interpolation means comprise address generating means for generating x and y addresses of the picture element in a PIXEL plane, region determining means for determining whether or not the picture element data defined by said x and y addresses is within said polygon region and outputting the x- and y- directional co-ordinate picture element data and a determination signal when said picture element data is within said polygon region, first calculating means for receiving the partial differential co-efficients for calculating sums of the partial differential co-efficients:

$\Sigma\partial z/\partial x$, $\Sigma\partial I/\partial x$, $\Sigma\partial z/\partial y$, and $\Sigma\partial I/\partial x$;

second calculating means for adding the sums to the initial co-ordinate $z_0$ and the initial intensity $I_0$ for providing the z- directional co-ordinate and intensity picture element data, and gate means for outputting the z- directional co-ordinate and intensity picture element data in response to the determination signal.

Preferably, the plane parameter calculating means is operated at the beginning of the operation for generating the polygon picture element data, and the address generating means, the region determining means, the first and second calculating means, and the gate means are periodically operated at each pixel generation period to interpolate picture element data following a one time data transfer from the plane parameter calculating means to the address generating means and the first calculating means.

According to another aspect of the present invention, there is provided a method of generating picture element data for painting a colour polygon figure characterised by the steps of receiving polygon figure data for generating picture element data, defining two plane formulae expressing three dimensional co-ordinates of said polygon figure and intensities in a polygon plane, defining initial co-ordinates and initial intensity and calculating partial differential co-efficients, and interpolating co-ordinate and intensity picture element data from said initial co-ordinates and intensity and said partial differential co-efficients.

The present invention will be described in more detail, by way of example, with reference to the accompanying drawings, in which:-

Figure 1 is a block diagram of a prior art apparatus;

Figure 2 is a timing chart briefly explaining the interpolation, the data transfer, and the picture element data generation in the prior art apparatus;

Figure 3 is a block diagram of an embodiment of an image data processing system for generating picture element data for painting a polygon figure according to the present invention; and

Figure 4 is a timing chart illustrating the interpolation and the picture element data generation in the system of Figure 3.

Before describing an embodiment of an image processing system according to the present invention, and the operation thereof, an algorithm for generating picture element data for painting a polygon figure will be described.

Assuming that a plane formula for a polygon figure is expressed by the following formula:

$$ax + by + cz = d \qquad (1)$$

where a, b, c and d are co-efficients, and x, y and z are co-ordinates.

The above plane formula (1) can be solved when three vertices of the polygon are given. Assuming that $(x_1, y_1, z_1)$ $(x_2, y_2, z_2)$ and $(x_3, y_3, z_3)$ are co-ordinates of the three vertices defined by the following determinant A\

EP 0 410 720 A2

$$A = \begin{vmatrix} x_1 & y_1 & z_1 \\ x_2 & y_2 & z_2 \\ x_3 & y_3 & z_3 \end{vmatrix}$$

Then the co-efficients a, b and c in the plane formula can be defined as follows:

$$a = \frac{y_1 z_1 + y_2 z_3 + y_3 z_1 - y_3 z_1 - y_2 z_2 - y_1 z_3}{A}$$

$$b = \frac{x_1 z_2 + x_2 z_3 + x_3 z_1 - x_3 z_1 - x_2 z_3 - x_1 z_2}{A}$$

$$C = \frac{x_1 y_2 + x_2 y_3 + x_3 y_1 - x_3 y_1 - x_3 y_2 - x_1 y_3}{A}$$

Thereafter, the following relationships may be obtained from the formula (1):

$\partial z/\partial x = -a/c$ ,

$\partial z/\partial y = -b/c$

and, then, the following formulae may be obtained:

$$\frac{\partial z}{\partial x} = \frac{z_1(y_2 - y_3) + z_2(y_3 - y_1) + z_3(y_1 - y_2)}{x_1(y_2 - y_3) + x_2(y_3 - y_1) + x_3(y_1 - y_2)} \quad \cdots (2)$$

$$\frac{\partial z}{\partial y} = \frac{z_1(x_3 - x_2) + z_2(x_1 - x_3) + z_3(x_2 - x_1)}{y_1(x_3 - x_2) + y_2(x_1 - x_3) + y_3(x_2 - x_1)} \quad \cdots (3)$$

Similarly, from the following plane formula for an intensity value:

$\partial x + \beta y + \gamma I = \delta$ (4)

the following formulae may be obtained:

$$\frac{\partial I}{\partial x} = \frac{I_1(y_2 - y_3) + I_2(y_3 - y_1) + I_3(y_1 - y_3)}{x_1(y_2 - y_3) + x_2(y_3 - y_1) + x_3(y_1 - y_3)} \quad \cdots (5)$$

$$\frac{\partial I}{\partial y} = \frac{I_1(x_3 - x_3) + I_2(x_1 - x_3) + I_3(x_2 - x_1)}{y_1(x_3 - x_2) + y_2(x_1 - x_3) + y_3(x_2 - x_1)} \quad \cdots (6)$$

The formulae (2), (3), (5) and (6) are the partial differential co-efficients to be obtained. Note that the above calculation can be carried out by plane parameter calculating means.

4

Also, a rectangle (surrounding box) circumscribing the polygon can be obtained by the plane parameter calculating means, and a co-ordinate value at a certain position within the four corners of the rectangle, and a width and height of the rectangle, are obtained by the plane parameter calculating means as initial values of picture element data to be generated.

Next, the initial x and y address values of the picture element data, and the width and height obtained by the above plane parameter calculating means are input to an address generating means, and in addition the partial differential co-efficient in the x direction of the plane, and the partial differential co-efficient in the y direction are input to a first calculating means. Further, other initial parameters, except for the x and y addresses of the picture element data obtained by the plane parameter calculating means, are input to a second calculating means.

Thereafter, the x and y address generating means is operated, and the first and second calculating means, a region determining means, and gate means are operated synchronously with the operation of the x and y address generation means, and as a result x and y addresses for the picture element data are continuously output from the x and y address generation means, and other parameters are continuously output from the first and second calculating means.

Furthermore, the x and y addresses of the picture element data output from the x and y address generating means are input to the region determining means, which determines whether or not the picture element data defined by the x and y addresses is within the polygon region in question to discriminate whether the picture element data is outside or inside of the polygon region, and the results are output by the region determining means. Final picture element data, i.e. absolute x, y and z addresses and an absolute intensity I, is output under the control of the region determining means, to thereby output required polygon painting picture element data to an image memory (not shown) connected to a display unit such as a CRT.

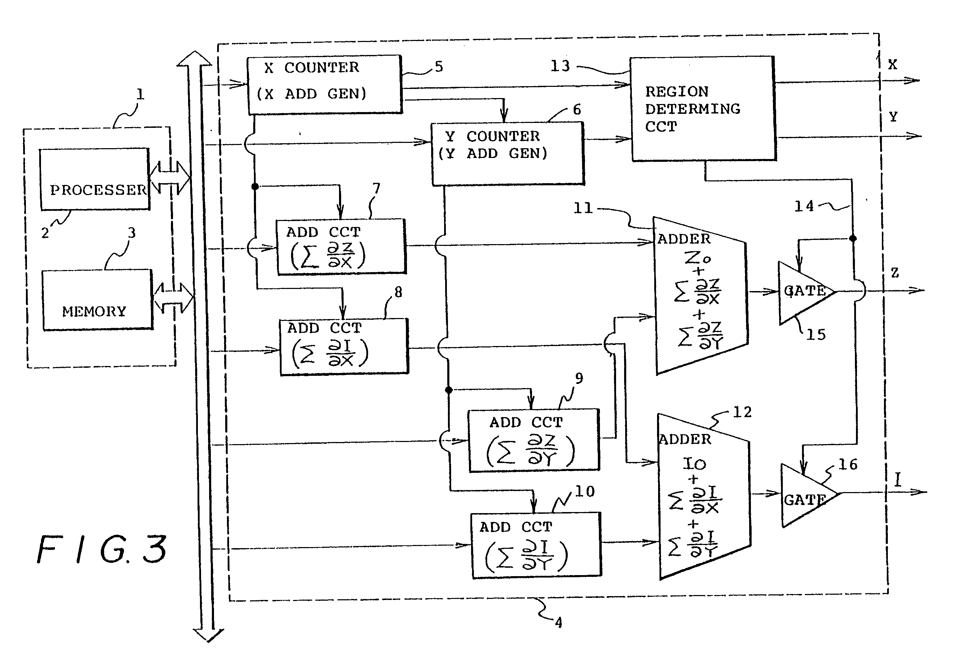

A specific embodiment of the present invention will now be described with reference to Figure 3, which shows an embodiment of an image data processing system for generating picture element data for painting a polygon figure.

In the drawing, a plane parameter calculation portion 1 is composed of a general purpose micro-processor 2 which solves plane formulae, calculates partial differential co-efficients and calculates a surrounding box, and a memory 3 for storing data required in the above calculation. The plane parameter calculation portion 1 supplies the partial differential co-efficients and initial picture element data to an inside plane interpolation portion 4.

The inside plane interpolation portion 4 is composed of an x address generator (counter) 5 for generating an x address of a picture element, a y address generator (counter) 6 for generating a y address of a picture element, an addition circuit 7 for calculating an increment or decrement in the z direction with respect to a unit change in an x direction on a plane: $\partial z/\partial x$, an addition circuit 8 for calculating an increment or decrement of the intensity I with respect to a unit change in the x direction on the plane: $\partial I/\partial x$, an addition circuit 9 for calculating an increment or decrement in the z direction with respect to a unit change in a y direction on the plane: $\partial z/\partial y$, an addition circuit 10 for calculating an increment or decrement of the intensity I with respect to a unit change in the y direction on the plane: $\partial I/\partial y$, an adder 11 for adding data output from the addition circuits 7 and 9, and an adder 12 for adding data output from the addition circuits 8 and 10. The inside-plane interpolation portion 4 further includes an inside and outside region determining circuit 13 which includes, for example, a known Sutherland type region determining circuit and determines whether or not the picture element expressed by the x and y addresses is within the polygon region, and gates 15 and 16 for controlling the output of final picture element data in response to a determination signal 14 from the inside and outside region determining circuit 13.

Each of the addition circuits consists of a register for holding a sum or the initial value and an adder for adding the corresponding increment or decrement to the previous sum.

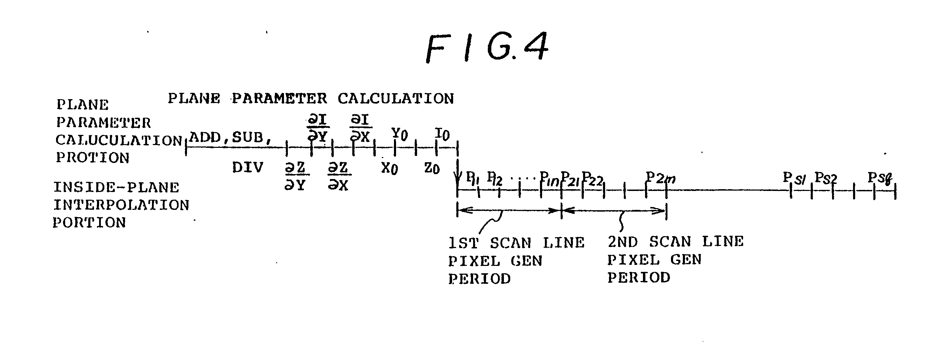

The operation of the image data processing system according to the present invention will now be described with reference to Figure 4.

(1) The plane parameter calculation portion 1 calculates a surrounding box circumscribing the polygon figure, and plane formulae, on the basis of given polygon shape data, the x, y and z co-ordinates and an intensity I.

(2) The plane parameter calculation portion 1 further calculates the partial differential co-efficients:
$\partial z/\partial x$, $\partial I/\partial x$, $\partial z/\partial y$, and $\partial I/\partial y$.

(3) The plane parameter calculation portion 1 supplies the above parameters for the picture element data, being the data for one of the four corners of the surrounding box obtained at step (1), as initial parameters $x_0$, $y_0$, $z_0$ and $I_0$ of the picture element data to the x address generator 5, the y address generator 6, the adder 11 and the adder 12, respectively.

(4) The plane parameter calculation portion 1 further supplies the partial differential co-efficients:

$\partial z / \partial x$, $\partial l / \partial x$, $\partial z / \partial y$, and $\partial l / \partial y$

obtained at step (2), to the addition circuit 7, the addition circuit 8, the addition circuit 9 and the addition circuit 10, respectively.

The above operations from step (1) to (4) are carried out one by one on the first occasion at which the picture element data generated for obtaining the polygon figure is output, and the following operations are repeatedly carried out in each pixel generation until the processing of the data for the polygon figure is completed.

(5) Then the x address generator 5 and the addition circuits 7 and 8 are synchronously operated, and the y address generator 6 and the addition circuits 9 and 10 are also synchronously operated, to supply the x and y addresses of each picture element to the inside and outside region determining circuit 13, the z increment (or decrement) to the adder 11 and the l increment (or decrement) to the adder 12.

(6) The adder 11 adds the z increment to a previous z co-ordinate and supplies the resultant new z address to the gate 15, and the adder 12 adds the l increment to a previous l value and supplies the resultant new l value to the gate 16.

(7) The gates 15 and 16 are opened and closed in response to a determination signal 14 from the inside and outside region determining circuit 13 to control the output of the picture element data.

(8) The operations of steps (5) to (7) are repeated, and the picture element data is continuously output until the data processing of an actual polygon figure is completed.

As a result of the above operation, the following two effects can be obtained according to the present invention.

First, the subtraction and division circuits in the prior art, which have a very low use rate, are rendered unnecessary by changing the algorithm, i.e. by executing the operation usually performed by those circuits in the general purpose processor 2. As a result, the construction of the circuit can be greatly simplified.

The calculation by the processor 2 is, as shown in Figure 4, carried out once for one plane of the polygon figure, and therefore, compared with the prior art, the overall processing time is not expanded.

The second effect is a great improvement of the speed of the generation of the picture element data, which will now be described in more detail. As shown in Figure 4, in the embodiment of the present invention, first the parameter calculation by the plane parameter calculation portion 1 and the transfer of the resultant parameters to the inside-plane interpolation portion 4 are executed only once. Next, the inside-plane interpolation portion 4 semi-continuously generates the picture element data in synchronisation with the generation of the x and y addresses. Hence, the need to wait for the completion of the parameter transfer, which is one problem in the prior art, is eliminated and the subtraction and division processes for generating the picture element date are not required. Namely, the embodiment of the present invention described above enables the very high speed generation of picture element data, which cannot be obtained by the prior art.

As described above, the present invention enables the omission of the subtraction and division circuits provided for the interpolation in the prior art, and thus provides a simplified circuit construction, and further enables a high speed generation of picture element data by comparison with the prior art.

## Claims

1. An image processing system for generating picture element data for painting a colour polygon figure, characterised by plane parameter calculating means (1) for defining initial co-ordinates $x_0$, $y_0$, and $z_0$ and an initial intensity $l_0$ of said polygon figure and calculating partial differential co-efficients:

$\partial z / \partial x$, $\partial l / \partial x$, $\partial z / \partial y$, and $\partial l / \partial y$,

on the basis of two plane formulae expressing three dimensional co-ordinates and intensities in a polygon plane; and interpolation means (4) connected to the plane parameter calculating means and comprising means (5, 6, 13) for generating from the initial co-ordinates $x_0$ and $y_0$ x- and y- directional co-ordinate picture element data, and calculating means (7 to 12) for calculating from the initial co-ordinate $z_0$ and initial intensity $l_0$ and the partial differential co-efficients z- directional co-ordinate and intensity picture element data.

2. A system according to claim 1 characterised in that the plane parameter calculating means comprises a signal processor (2) for defining the initial co-ordinates and initial intensity and calculating the partial differential co-efficients, and a memory (3) for storing the two plane formulae.

3. A system according to claim 1 or 2 characterised in that the interpolation means comprises address generating means (5, 6) for generating x and y addresses of the picture element in a PIXEL plane, region determining means (13) for determining whether or not the picture element data defined by said x and y addresses is within said polygon region and outputting the x- and y- directional co-ordinate picture element data and a determination signal when said picture element data is within said polygon region, first calculating means (7 to 10) for receiving the partial differential co-efficients for calculating sums of the partial differential co-efficients:

$\Sigma \partial z/ \partial x$, $\Sigma \partial l/ \partial x$, $\Sigma \partial z/ \partial y$, and $\Sigma \partial l/ \partial x$;

second calculating means (11, 12) for adding the sums to the initial co-ordinate $z_0$ and the initial intensity $l_0$ for providing the z- directional co-ordinate and intensity picture element data, and gate means (15, 16) for outputting the z- directional co-ordinate and intensity picture element data in response to the determination signal.

4. A system according to claim 3 characterised in that the plane parameter calculating means is arranged to be operated at the beginning of an operation for generating the polygon picture element data and to transfer data to the address generating means and the calculating means once, and in that the address generating means, the region determining means, the first and second calculating means and the gate means are arranged to be periodically operated at each pixel generation period to interpolate the picture element data at each pixel generation period.

5. A system according to claim 3 or 4 characterised in that the first calculating means includes a first addition circuit (7) having a register for storing the partial differential co-efficient: $\partial z/ \partial x$ and a sum thereof and an adder for obtaining a first sum $\Sigma \partial z/ \partial x$, a second addition circuit (8) having a register for storing the partial differential co-efficient $\partial l/ \partial x$ and a sum thereof and an adder for obtaining a second sum $\Sigma \partial l/ \partial x$, a third addition circuit (9) having a register for storing the partial differential co-efficient $\partial z/ \partial y$ and a sum thereof and an adder for obtaining a third sum $\Sigma \partial z/ \partial y$, and a fourth addition circuit (10) having a register for storing the partial differential co-efficient $\partial l/ \partial x$ and a sum thereof and an adder for obtaining a fourth sum $\Sigma \partial l/ \partial y$, and in that the first to fourth addition circuits are arranged to be operated synchronously with the generation of the x and y addresses from the address generating means.

6. A system according to claim 5 characterised in that the second calculating means comprises a fifth addition circuit (11) having a memory for storing the initial co-ordinate $z_0$ and a sum thereof and an adder for calculating a third sum ($z_0 + \Sigma \partial z/ \partial x + \Sigma \partial z/ \partial y$), and a sixth addition circuit (12) having a memory for storing the initial intensity $l_0$ and a sum thereof and an adder for calculating a sixth sum ($l_0 + \Sigma \partial l/ \partial x + \Sigma \partial l/ \partial y$).

7. A system according to any of claims 3 to 6 characterised in that the gate means comprises a first gate circuit (15) for receiving the third sum and outputting the same in response to the determination signal, and a second gate circuit (16) for receiving the fourth sum and outputting the same in response to the determination signal.

8. A system according to any of claims 3 to 7 characterised in that the region determining means (13) comprises a Sutherland type determining circuit.

9. A system according to any preceding claim characterised in that the plane formulae employed by the plane parameter calculating means are defined by the equations:

$a x + b y + c z = d$,

$\alpha x + \beta y + \gamma l = \delta$

where, a, b, c, d, $\alpha$, $\beta$, $\gamma$ and $\delta$ are co-efficients, the plane parameter calculating means defines the initial co-ordinates as any one of four corners of a rectangle circumscribing the polygon, and the plane parameter calculating means calculates the partial differential co-efficients on the basis of the formulae:

$$\frac{\partial z}{\partial x} = \frac{z_1(y_2 - y_3) + z_2(y_3 - y_1) + z_3(y_1 - y_2)}{x_1(y_2 - y_3) + x_2(y_3 - y_1) + x_3(y_1 - y_2)}$$

$$\frac{\partial z}{\partial y} = \frac{z_1(x_3 - x_2) + z_2(x_1 - x_3) + z_3(x_2 - x_1)}{y_1(x_3 - x_2) + y_2(x_1 - x_3) + y_3(x_3 - x_1)}$$

$$\frac{\partial I}{\partial x} = \frac{I_1(y_2 - y_3) + I_2(y_3 - y_1) + I_3(y_1 - y_2)}{x_1(y_2 - y_3) + x_2(y_3 - y_1) + x_3(y_1 - y_2)}$$

$$\frac{\partial I}{\partial y} = \frac{I_1(x_3 - x_2) + I_2(x_1 - x_3) + I_3(x_2 - x_1)}{y_1(x_3 - x_2) + y_2(x_1 - x_3) + y_3(x_3 - x_1)}$$

10. An image processing system for generating picture element data for painting a colour polygon figure, characterised by plane parameter calculating means (1) for defining initial co-ordinates and an initial intensity of said polygon figure and calculating partial differential co-efficients:

$\partial z/\partial x$, $\partial I/\partial x$, $\partial z/\partial y$, and $\partial I/\partial y$,

on the basis of two plane formulae expressing three dimensional co-ordinates and intensities in a polygon plane; address generating means (5, 6), connected to said plane parameter calculating means, for generating x and y addresses of said picture element in a PIXEL plane; region determining means (13), connected to said address generating means, for determining whether or not the picture element data defined by said x and y addresses is within said polygon region and outputting a determination signal indicating that said picture element data is within said polygon region, when said picture element data is within said polygon region; first calculating means (7 to 10), connected to said plane parameter calculating means for receiving said partial differential co-efficients, and to said address generating means, for calculating sums of said partial differential co-efficients:

$\Sigma\partial z/\partial x$, $\Sigma\partial I/\partial x$, $\Sigma\partial z/\partial y$, and $\Sigma\partial I/\partial x$;

second calculating means (11, 12), connected to said plane parameter calculating means for receiving said initial co-ordinates and initial intensity, and to said calculating means, for adding resultant sums to said initial z-directional co-ordinate and intensity picture element data; and gate means (15, 16), connected to said second calculating means, for outputting said picture element data obtained by said second calculating means in response to said determination signal.

11. A method of generating picture element data for painting a colour polygon figure characterised by the steps of receiving polygon figure data for generating picture element data, defining two plane formulae expressing three dimensional co-ordinates of said polygon figure and intensities in a polygon plane, defining initial co-ordinates and initial intensity and calculating partial differential co-efficients, and interpolating co-ordinate and intensity picture element data from said initial co-ordinates and intensity and said partial differential co-efficients.

12. A method of generating picture element data for painting a colour polygon figure characterised by the steps of: receiving polygon figure data for generating picture element data, defining two plane formulae expressing three dimensional co-ordinates x, y and z of said polygon figure and intensities in a polygon plane, defining initial co-ordinates and initial intensity and calculating partial differential co-efficients; and receiving said initial co-ordinates and intensity, and said partial differential co-efficients, and repeatedly calculating an absolute z- direction co-ordinate and an absolute intensity on the basis of said initial co-ordinates and intensity, and said partial differential co-efficients, determining whether or not said picture element data defined by said x and y addresses is within said polygon region, and outputting said calculated absolute z-direction co-ordinate and intensity together with x and y- direction co-ordinates when said picture element is within said polygon region, at every PIXEL generation period.

8

F I G. 1

PRIOR ART

SIDE INTERPOLATION PORTION

LINE INTERPOLATION PORTION

EP 0 410 720 A2

FIG. 2    PRIOR ART

EP 0 410 720 A2

F I G. 3

EP 0 410 720 A2

# F I G.4

PLANE PARAMETER CALCULATION

PLANE
PARAMETER
CALUCULATION
PROTION

INSIDE−PLANE
INTERPOLATION
PORTION

ADD, SUB,

DIV

$\frac{\partial I}{\partial Y}$  $\frac{\partial I}{\partial X}$  $Y_0$  $I_0$

$\frac{\partial Z}{\partial Y}$  $\frac{\partial Z}{\partial X}$  $X_0$  $Z_0$

$P_1$  $P_2$  $\cdots$  $P_{1n}$ $P_{21}$ $P_{22}$   $P_{2m}$    $P_{s1}$  $P_{s2}$   $P_{s\ell}$

1ST SCAN LINE    2ND SCAN LINE
PIXEL GEN        PIXEL GEN
PERIOD           PERIOD